# EUROPÄISCHE PATENTSCHRIFT

(11) **EP 0 312 919 B1**
(45) Veröffentlichungstag und Bekanntmachung des Hinweises auf die Patenterteilung: **17.03.1993**
(21) Anmeldenummer: 88117077.3
(22) Anmeldetag: 14.10.1988
(51) Int. Cl.: G01N 21/47, G01N 21/84

(54) **Vorrichtung zur Bestimmung der Oberflächenfeuchtigkeit**
Device for determining of superficial humidity
Dispositif pour la détermination de l'humidité superficielle

(30) Priorität: 17.10.1987 DE 3735269
(43) Veröffentlichungstag der Anmeldung: 26.04.1989
(73) Patentinhaber: HOECHST AKTIENGESELLSCHAFT, 65926 Frankfurt am Main (DE)
(72) Erfinder: Lask, Helmut, D-6228 Eltville (DE); Holst, Arno, Dr., D-6200 Wiesbaden (DE); Dryczynski, Kurt, verstorben (DE)

(56) Entgegenhaltungen:
- DE-A- 2 420 594
- DE-U- 7 605 224
- US-A- 3 540 025
- US-A- 4 490 618
- US-A- 4 676 638

## Beschreibung

Die Erfindung betrifft eine Vorrichtung, die geeignet ist, die Oberflächenfeuchtigkeit, insbesondere von saugfähigen, flüssigkeitsabsorbierenden bzw. flüssigkeitsweiterleitenden flächenförmigen Gebilden wie z.B. Filterpapier, Babywindeln, Damenbinden, Inkontinenzwindeln, Krankenunterlagen, Vliesstoffen, Textilien zu bestimmen. Bei Materialien mit homogener Feuchtigkeitsverteilung kann außerdem über die Oberflächenmessung eine Aussage über die Feuchtigkeit im Inneren eines Systems getroffen werden.

Für die Beurteilung von Materialien der oben beschriebenen Art ist es oft erforderlich, die Feuchtigkeitsverhältnisse an der Oberfläche oder im Inneren des Systems zu kennen, vor allem, wenn ihr Gebrauchswert stark von diesem Parameter bestimmt wird. Dies ist z.B. bei Babywindeln, Inkontinenzwindeln, Krankenunterlagen und Textilien, die direkt mit der Haut in Berührung kommen, der Fall. In vielen Fällen korrelieren die Feuchtigkeitsverhältnisse an der Oberfläche mit denen im Gesamtsystem. Dies ist jedoch nicht immer der Fall. Besonders dann nicht, wenn die zu untersuchenden Gebilde aus mehreren Schichten unterschiedlicher Saugfähgigkeit und Absorptionsfähigkeit bestehen. Als Beispiel hierfür seien Hygieneartikel, medizinische Unterlagen und Binden genannt. Diese bestehen aus einem hochsaugfähigen Kern und einer Deckschicht mit stark verminderter Flüssigkeitsaufnahme, wie z.B. Polypropylenvlies.

Es ist für die Feuchtigkeitsmessung eine Vielzahl von Verfahren und Vorrichtungen bekannt. So kann man diese am Objekt beispielsweise über Änderungen von Leitfähigkeit, Induktivität, Kapazität, Intensität von IR-Strahlen bestimmen. Diese Verfahren haben jedoch häufig die Eigenart, daß sie nicht die Oberflächenverhältnisse des Systems allein, sondern tiefere Schichten miterfaßt werden. Aus DE-A-2 420 594 ist eine Anordnung zur Messung von optischen Oberflächenveränderungen auf mit Flüssigkeit benetzten Glasscheiben bekannt, wobei der Anteil des reflektierten Lichtstrahls gemessen wird.

Die Anordnung besteht aus einem rechtswinkligen Prisma, einer Strahlungsquelle, deren parallel gerichtete Lichtstrahlen auf eine der beiden Kathodenflächen auftreffen, einem lichtelektrischen Wandler und geeigneten optischen Hilfsmitteln, die dafür sorgen, daß der Strahlengang über der gesamten Kathethenfläche gleichmäßig verteilt und senkrecht zu den Flächen verläuft.

Die Anordnung ermöglicht eine qualitative Aussage (Ja/Nein-Aussage) hinsichtlich der Oberflächenfeuchtigkeit. Mit der erfindungsmäßig beschriebenen Meßapparatur ist es hingegen möglich, die Feuchtigkeitsverhältnisse an der Oberläche zu ermitteln und somit die Oberflächenfeuchtigkeit qualitativ und quantitativ z.B. bei Hautkontakt wesentlich praxisnäher als andere Verfahren zu erfassen.

Gegenstand der Erfindung ist eine Vorrichtung zur Bestimmung der Oberflächenfeuchtigkeit, gemäß Anspruch 1 bzw Anspruch 2.

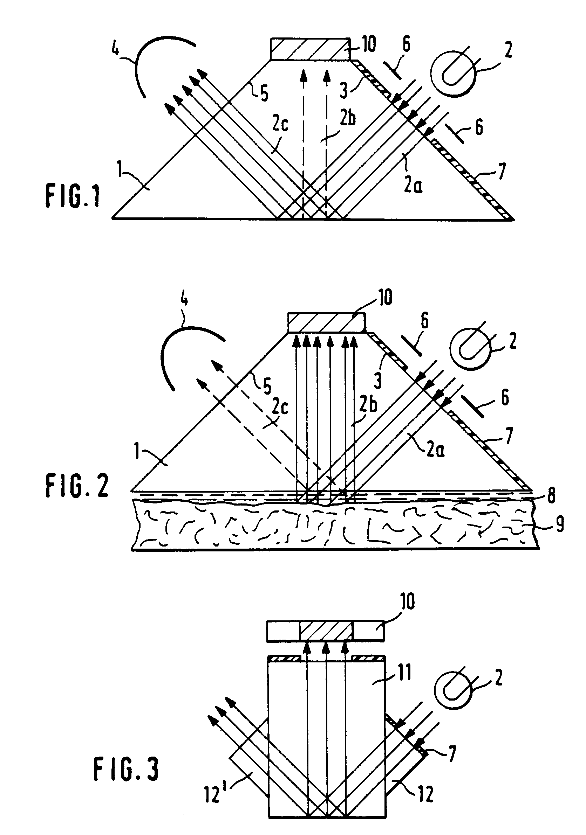

Eine bevorzugte Ausführung dieser Art ist in Figur 1 dargestellt. Bei einem rechtwinkligen Prisma (1) ist oberhalb der einen Kathetenfläche (3) eine Lichtquelle (2) angebracht. Die aus dieser Lichtquelle herrührenden parallelen Lichtstrahlen durchlaufen das Prisma und treffen auf der Hypothenusenfläche an die Grenzfläche Glas/Luft. Zur Parallelrichtung der Lichtstrahlen kann man in dem Strahlengang Blenden (6) vorsehen und die Kathetenfläche kann an den Stellen, an denen kein Licht einfallen soll, mit einer lichtundurchlässigen Schicht (7) abgedeckt werden. Liegt nun die Hypothenusenfläche dieses Prismas auf einer trockenen Oberfläche auf, so erfolgt aufgrund des geringen Kontakts zwischen Glas und Oberfläche des zu messenden Objekts Totalreflektion des einfallenden Lichtes und der überwiegende Teil verläßt das Prisma durch die zweite Kathetenfläche (5) und wird von der Lichtfalle (4) absorbiert. Entsprechend der geringen Kontaktstellen wird ein geringer Anteil Streulicht (2b) erzeugt, das den photoelektrischen Lichtwandler (10) erreicht. Die Lichtfalle hat die Form eines schwarzen Hohlraums. Bei einer praxisgerechten Ausführung dieser Vorrichtung kann als solche Lichtfalle das Gehäuse dienen, wenn dieses angerauht und geschwärzt ist.

Liegt die Hypothenusenfläche des Prismas auf einer feuchten Oberfläche auf, wie in Figur 2 dargestellt, verläßt der Lichtstrahl das Prisma an der Hypothenusenfläche und wird an der unregelmäßigen Oberfläche (8) des Prüfkörpers (9) gestreut. Der überwiegende Teil des gestreuten Lichtes (2a) gelangt wieder in das Glasprisma und trifft auf einen lichtelektrischen Wandler (10), der sich im Winkel der beiden Katheterflächen genau gegenüber der Hypothenusenfläche befindet. Die in diesem lichtelektrischen Wandler erzeugte Spannung ist proportional der Feuchtigkeitsschicht auf der Oberfläche des Prüfkörpers und wird mit entsprechenden Meßgeräten angezeigt. Mit Hilfe eines Schreibers lassen sich die Meßvorgänge in zeitlicher Abhängigkeit vorteilhaft aufzeichnen.

Für eine einwandfreie Messung muß die Hypothenusenfläche des Prismas in unmittelbarem Kontakt mit der zu prüfenden Oberfläche bleiben. Dies wird bereits erreicht durch das Eigengewicht des auf der zu prüfenden Oberfläche aufliegenden Prismas. Durch Auflegen von zusätzlichen Gewichten kann dieser Kontakt zu der zu messenden Oberfläche, insbesondere bei weichen, elastischen Objekten, wie etwa Windeln, verstärkt werden. Umgekehrt ist es auch möglich, das Auflagegewicht möglicht gering zu halten, indem das Prisma so umgedreht wird, daß die Hypothenusenfläche nach oben zu liegen kommt und das zu messende Objekt dann auf die Hypothenusenfläche aufgelegt wird. Bei einer derartigen Meßweise ist jedoch Fremdlichteinfall auszuschließen.

Die erfindungsgemäße Vorrichtung kann für quantitative Messungen herangezogen werden, muß dabei aber vorher geeicht werden. Dies geschieht mit saugfähigen Materialien, deren Feuchtigkeit über das gesamte Volumen gleich ist. Diesen Zustand erreicht man, indem man den Saugkörper mit Flüssigkeit maximal tränkt und durch Abschleudern auf den vorbestimmten Feuchtigkeitswert einstellt. Man erhält auf diese Weise eine für den zu untersuchenden Saugkörper, die angewandte Lampenhelligkeit und die vorgegebene Belastung des Meßkopfes charakteristische Eichkurve. Durch Mitverwendung eines Linearverstärkers wird erreicht, daß das verwendete Photoelement im Kurzschlußstrom arbeitet. Dadurch erhält man einen linearen Zusammenhang zwischen der gemessenen Lichtintensität und dem Spannungsausgang. Die sonst leicht gekrümmten Eichkurven werden zu Geraden.

Eine andere Ausgestaltung der erfindungsgemäßen Vorrichtung ist in Figur 3 dargestellt. Anstelle des rechtwinkligen Prismas wird hier ein quaderförmiger Block (11) genommen. An zwei gegenüberliegenden Seiten dieses Blocks sind je ein Prisma (12 und 12') angebracht, und zwar in der Weise, daß der Block mit den beiden Prismen zusammen den gleichen Strahlengang ermöglicht wie bei dem Prisma gemäß Figur 1. Der lichtelektrische Wandler befindet sich hier auf der oberen Begrenzungsfläche des Quaders.

### Beispiel 1

Das Beispiel zeigt die Eichung des Systems am Beispiel von einem hochsaugfähigen Filterpapier (Flächengewicht: 150 g/m²). Durch Tränken mit Wasser und anschließendes Absaugen mit einem anderen Filterpapier bzw. durch Abzentrifugieren wurden Papiere mit unterschiedlichem Wassergehalt eingestellt. Unter Zuhilfenahme eines Linearverstärkers wurden die der Feuchtigkeit entsprechenden Skalenteile eines angeschlossenen Linienschreibers unter einer Belastung von 30 g/cm² ermittelt.

| Feuchtigkeit g H₂O/g Papier | Schreiberanzeige Skt |
|---|---|
| 0 | 0 |
| 0,5 | 4 |
| 0,7 | 4 |
| 0,9 | 6 |
| 1,1 | 13 |
| 1,1 | 14 |
| 1,1 | 9 |
| 1,2 | 10 |
| 1,4 | 17 |
| 1,7 | 14 |
| 1,7 | 16 |
| 1,9 | 15 |
| 1,9 | 11 |
| 2,3 | 19 |
| 2,9 | 27 |
| 3,0 | 28 |
| 3,2 | 25 |
| 4,2 | 33 |
| 5,8 | 44 |
| maximale Absorption (siehe auch Figur 4) | 64 r = 0,9710 |

### Beispiel 2

Das Beispiel zeigt den Einfluß der Feuchtigkeit einer Babywindel auf die Oberflächenfeuchte mit und ohne Deckvlies. Als Testobjekt wurde aus einer Windel vom Typ PAMPERS maxi plus ein 10 x 12,5 cm großes Segment homogen mit Wasser getränkt und auf unterschiedliche Feuchtigkeitsgehalte wie in Beispiel 1 eingestellt.

| Feuchtigkeit g H₂O/g Windel | Windel ohne Vlies | Feuchtigkeit g H₂O/g Windel | Windel mit Vlies |
|---|---|---|---|
| 0 | 0 | 0,5 | 2 |
| 1,7 | 14 | 1,0 | 2 |
| 2,1 | 16 | 1,5 | 2 |
| 2,2 | 27 | 2,1 | 2 |
| 2,6 | 23 | 2,7 | 2 |
| 2,6 | 24 | 3,1 | 2 |
| 2,7 | 28 | 3,5 | 2 |
| 3,2 | 27 | 4,2 | 2 |
| 3,5 | 30 | 4,5 | 19 |
| 3,8 | 31 | 4,7 | 21 |
| 3,9 | 38 | 5,2 | 51 |
| 4,8 | 42 | 5,7 | 60 |
| 5,4 | 42 | max. Absorption | 61 |
| 5,7 | 48 | 5,9 | 54 |
| 6,1 | 51 | 6,0 | 59 |
| max. Absorption | | | |
| | r = 0,9757 | r_{(4,2-6,0)} = 0,9554 | |

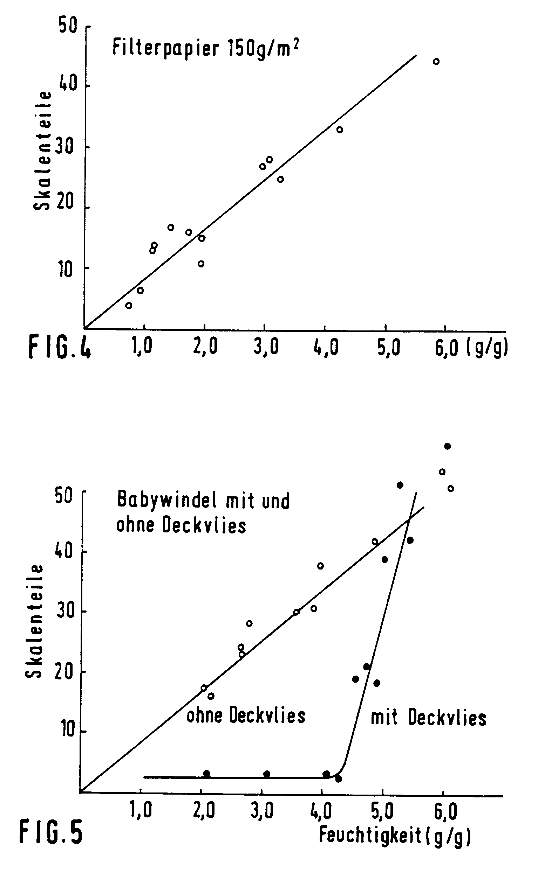

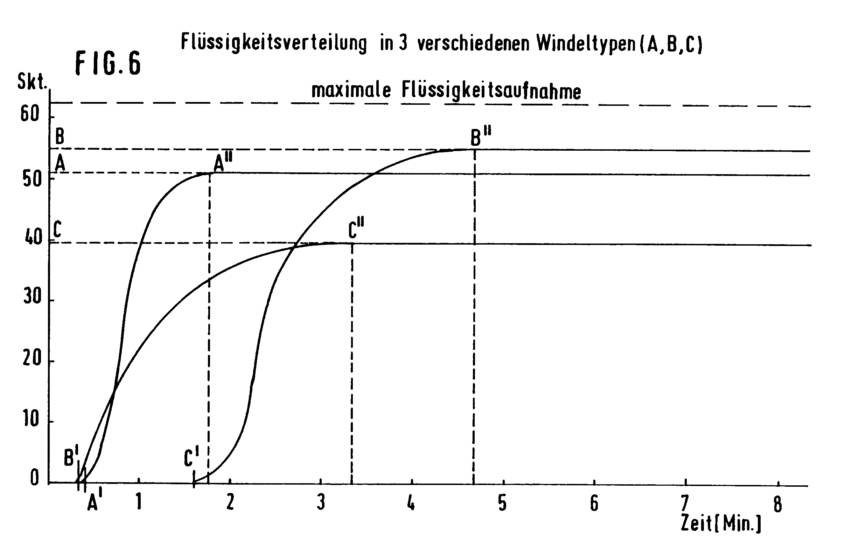

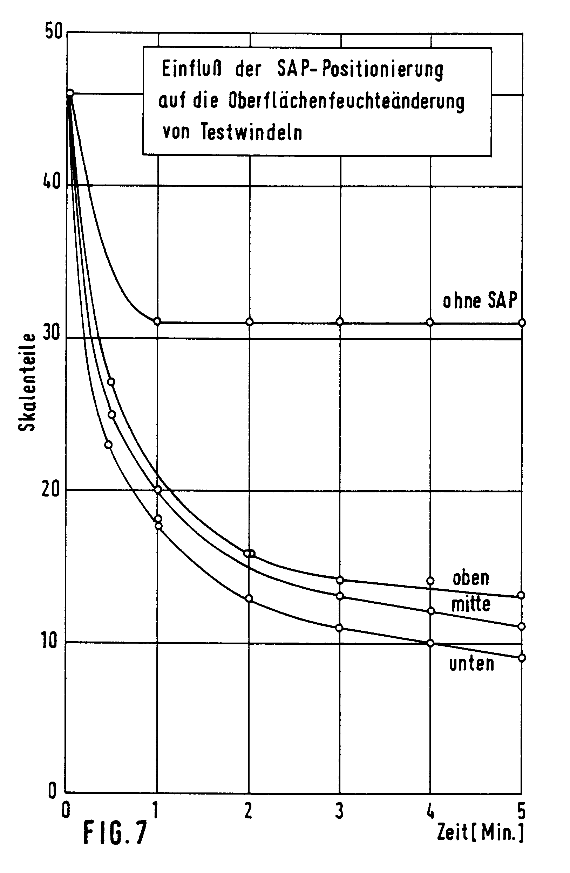

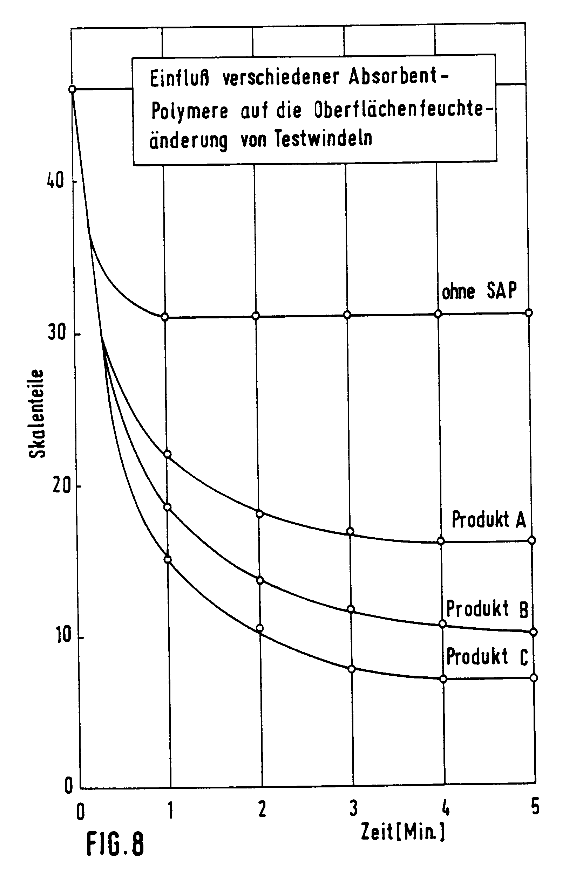

Die Ergebnisse sind in Figur 5 graphisch dargestellt.

Anhand dieser Ergebnisse ist erkennbar, daß durch Verwendung von Polypropylen-Deckvlies eine trockene Oberfläche erreicht wird, obwohl das eigentliche Saugmaterial schon mit etwa 70 % der maximalen Flüssigkeitsmenge einen sehr feuchten Zustand erreicht hat. Diese Zustände werden auch mittels taktiler Beurteilung entsprechend beurteilt. Es ist somit möglich, die für die Bewertung der Gebrauchstüchtigkeit erforderliche taktile Untersuchung zahlenmäßig einzuordnungen und zu erfassen. Mit Hilfe der beschriebenen Methode und Vorrichtung ist weiterhin zahlenmäßig erfaßbar, wieviel Flüssigkeit in einem Saugkissen wie z.B. einer Babywindel sich noch frei beweglich befinden darf neben der absorptiv gebundenden Flüssigkeit, ohne daß es zu einer Hautbefeuchtung kommt.

Bei einer bisher im Hygienebereich üblichen Untersuchung der Rückfeuchtung ("wetback") wird Filterpapier auf den Saugkörper gelegt, und es wird die heraussaugbare Flüssigkeitsmenge unter Belastung bestimmt. Diese Methode simuliert die Verhältnisse an der Grenzfläche Deckvlies Windel/Babyhaut nur unvollkommen. Die Messungen mit der erfindungsgemäßen Methode und Vorrichtung zeigen bei einer Windel den Übergang von trocken nach naß weit praxisnäher als der "wetback-Test". Somit ist diese Erfindung vorteilhaft einzusetzen bei der Entwicklung von Hygieneartikeln und medizinischen Unterlagen. Weiterhin ist es möglich, bei Konstanthaltung der Bedingungen im Saugkissen eine Bewertung von Deckvliesmaterialien vorzunehmen.

### Beispiel 3

In diesem Beispiel wird gezeigt, wie mit Hilfe der Erfindung dynamisch ablaufende Vorgänge in saugfähigen Systemen untersucht und beurteilt werden können.

Bei der Entwicklung von Saugkörpern wie z.B. Babywindeln ist es wichtig zu wisssen, wie sich die zu absorbierende Flüssigkeit im zeitlichen Verlauf in der Windel verteilt. Da sich hierbei alle beteiligten Materialien gegenseitig beeinflussen, kann die Oberflächenfeuchtemessung auch in diesem Fall vorteilhaft angewendet werden. So läßt sich nicht nur die Wanderungsgeschwindigkeit der Flüssigkeit in dem kapillaraktiven System (Drainage), sondern zusätzlich der partielle Sättigungsgrad als Verhältnis der vorhandenen Feuchte zur Maximalfeuchte ermitteln. Bei diesen Messungen muß das Deckvlies an der Meßstelle entfernt werden, um den in Beispiel 2 dargelegten Einfluß auszuschalten.

Fiugr 6 zeigt drei typische Kurvenverläufe. Sie zeigen für jeden Saugkörper 3 charakteristische Meßpunkte (A, B, C = relative Endfeuchte; A', B', C' = zeitlicher Beginn der Befeuchtung; A'', B'', C'' = zeitliches Ende der Befeuchtung). Hierbei ist die Entfernung zwischen Flüssigkeitsaufgabe und Meßstelle frei wählbar.

In jüngster Zeit enthalten immer mehr Windeln Super Absorbent Polymere (SAP). Mit Hilfe dieser Substanzen kann die Windelkonstruktion völlig neu gestaltet und optimiert werden. Bei Verwendung von Super Absorbent Polymer enthält eine Windel eine weitere Komponente, die Flüssigkeitsabsorption, Absorptionsgeschwindigkeit und Retention wesentlich beeinflußt.

Über die Oberflächenfeuchtemessung mit Hilfe der Erfindung läßt sich der Einfluß der Plazierung ebenfalls beschreiben, wie Beispiel 4 zeigt.

### Beispiel 4

In ein Windelsegment Pampers maxi plus (10 x 10 cm) werden 1,0 g eines Super Absorbent Polymeres zwischen Fluff und Deckvlies (oben), in die Mittellage (Mitte) und zwischen Fluff und Backsheet (unten) gegegeben und die zeitliche Abnahme der Oberflächenfeuchte nach Zugabe von 40 ml 0,9 %iger NaCl-Lösung im Vergleich zu einer Windel ohne SAP bestimmt. Die Ergebnisse zeigt Figur 7. Aus den Diagrammen ist zu ersehen, daß die Windeloberfläche umso trockener wird, je näher das Super Absorbent an der Windeloberfläche plaziert wird.

Der Einfluß von SAP unterschiedlicher Herkunft auf die Absorptions- und Retentionsvorgänge in einem Saugkörper kann auch in der folgenden Meßanordnung charakterisiert werden.

### Beispiel 5

In eine Windel Pampers maxi plus 12,5 x 10 cm, mit ca. 14 g Zellstoff werden 0,5 g Super Absorbent Polymer unterschiedlicher Herkunft, jedoch mit vergleichbarer Absorptionskapazität zwischen Saugkissen und Deckvlies homogen verteilt. Danach werden 40 ml NaCl 0,9 % zentral in einen Metallring von ⌀ 6 cm eingegossen. Etwa 5 Sekunden nach erfolgter Penetration der Flüssigkeit in den Saugkörper entfernt man den Metallring, setzt den Meßkopf der erfindungsgemäßen Vorrichtung auf die befeuchtete Windel und den Schreiber in Gang. Nach 5 Minuten beendet man die Messung. Aus dem Diagramm in Figur 8 ist zu ersehen, daß bei Verwendung von SAP die Abtrocknung einer Windeloberfläche ("Redrying) gegenüber einer Vergleichswindel ohne SAP deutlich verbessert wird. Darüber hinaus zeigen die drei eingesetzten Absorbent Polymeren unterschiedliche Wirksamkeit auf die Oberflächenfeuchte. Das Beispiel zeigt, daß die Erfindung ebenfalls geeignet ist, den Einfluß unterschiedlichere Super Absorbent Polymere auf die Oberflächentrockenheit zu beurteilen und zu charakterisieren.

Auch bei der Bewertung der Feuchte von Textilien kann die Erfindung vorteilhaft angewandt werden, wie das folgende Beispiel zeigt.

### Beispiel 6

Ein entschlichtetes Baumwollgewebe (Flächengewicht 158 g/cm²) wird mit unterschiedlichen Feuchtigkeitsmengen beschickt und in der beschriebenen Weise gemessen:

| Feuchtigkeit g H₂O/g Gewebe | Schreiberanzeige Skt |
|---|---|
| 0,2 | 4 |
| 0,53 | 9 |
| 0,7 | 12 |
| 0,8 | 17 |
| 1,0 | 32 |
| 1,37 | 43 |
| 1,35 | 38 |
| | r = 0,967 |
| max. | 40 |

## Patentansprüche

1. Vorrichtung zur Bestimmung der Oberflächenfeuchtigkeit, mit einem Reflexionsprisma nach Dove (1), einer Strahlungsquelle (2), die so gestaltet ist, daß ihre parallel gerichteten Strahlen (2a) senkrecht auf eine der beiden Kathetenflächen (3) des Prismas auftreffen und von der Hypothenusenfläche, die mit der zü messenden Oberfläche in kontakt gebracht wird, reflektiert werden, und einem lichtelektrischen Wandler (10), gekennzeichnet durch eine Lichtfalle (4), die die aus der anderen Kathetenfläche (5) austretenden Lichtstrahlen (2c) auffängt, und dadurch daß sich der lichtelektrische Wandler (10) in dem von den beiden Kathetenflächen gebildeten Winkel befindet und so angeordnet ist, daß seine Meßfläche der Hypothenusenfläche des Prismas parallel gegenüberliegt und der das von der zu messenden Oberfläche gestreute Licht (2b) umwandelt.

2. Vorrichtung zur Bestimmung der Oberflächenfeuchtigkeit, mit einem ersten Prisma (12), einer Strahlungsquelle (2), die so gestaltet daß ihre parallel gerichteten Strahlen (2a) senkrecht auf eine der beiden Kathetenflächen (3) des Prismas auftreffen und einem lichtelektrischen Wandler (10), gekennzeichnet durch einen quaderförmigen Block (11) an dessen zwei gegenüberliegenden Seiten einerseits das erste Prisma (12) und andererseits ein zweites Prisma (12') aufgesetzt sind, eine Lichtfalle (4), die die aus dem zweiten Prisma (12') austretenden Lichtstrahlen (2c) auffängt, und dadurch daß sich der lichtelektrische Wandler (10) an einer der zu den oben genannten Seiten senkrecht verlaufenden Seiten befindet und so angeordnet ist, daß seine Meßfläche der verbleibenden Seite des quaderförmigen Blocks parallel gegenüberliegt und diese verbleibende Seite mit der zu messenden Oberfläche in kontakt gebracht wird, von der Licht (2b) gestreut wird, welches vom Wandler umgewandelt wird.

## Claims

1. A device for determining surface moisture, having a Dove reflection prism (1), a radiation source (2) of such a design that its beams (2a), which are aligned parallel, perpendicularly strike one of the two small surfaces (3) of the prism, and are reflected by the hypotenuse surface which is brought into contact with the surface to be measured, and a photoelectric transducer (10), which comprises a light trap (4) which traps the light beams (2c) emanating from the other small surface (5), and the photoelectric transducer (10) being located in the angle formed by the two small surfaces and being arranged such that its measurement surface is located parallel and opposite to the hypotenuse surface of the prism, and converting the light (2b) scattered by the surface which is to be measured.

2. A device for determining surface moisture, having a first prism (12), a radiation source (2) of such a design that its beams (2a), which are aligned parallel, perpendicularly strike one of the two small surfaces (3) of the prism, and a photoelectric transducer (10), which comprises a cuboid block (11) with, on one side, the first prism (12) and, on the other side, a second prism (12') attached to the two opposite sides of the block, and a light trap (4) which traps the light beams (2c) emanating from the second prism (12'), and the photoelectric transducer (10) being located on one of the sides extending perpendicularly to the abovementioned sides, and being arranged such that its measurement surface is located parallel and opposite to the remaining side of the cuboid block and this remaining side is brought into contact with the surface to be measured, which scatters light (2b) which is converted by the transducer.

## Revendications

1. Dispositif pour déterminer l'humidité superficielle, comportant un prisme de réflexion selon Dove (1), une source de rayonnement (2) conçue de façon que ses rayons (2a), orientés parallèlement, tombent normalement sur l'une des deux surfaces latérales (3) du prisme, et soient réfléchis par la face hypoténuse, mise en contact avec la surface devant faire l'objet de la mesure, et comportant un convertisseur photo-électrique (10), caractérisé en ce qu'il comporte un piège à lumière (4), qui capte les rayons lumineux (2c) sortant de l'autre surface latérale (5), et en ce que le convertisseur photo-électrique (10) se trouve dans l'angle formé par les deux surfaces latérales du prisme orthogonal et est disposé de façon que sa surface de mesure soit opposée et parallèle à la surface hypoténuse du prisme, convertisseur qui convertit la lumière (2b), diffusée par la surface à mesurer.

2. Dispositif pour déterminer l'humidité superficielle, comportant un premier prisme (12), une source de rayonnement (2) conçue de façon que ses rayons (2a), orientés parallèlement, tombent normalement sur l'une des deux surfaces latérales (3) du prisme, et comportant un convertisseur photo-électrique (10), caractérisé en ce qu'il comporte un bloc parallélépipédique (11), en les deux côtés opposés duquel sont placés d'une part le premier prisme (12), d'autre part un deuxième prisme (12'), et comportant un piège à lumière (4), qui capte les rayons lumineux (2c) sortant du deuxième prisme (12'), et en ce que le convertisseur photo-électrique (10) se trouve sur l'un des côtés perpendiculaires aux côtés mentionnés ci-dessus et est disposé de façon que sa surface de mesure soit opposée et parallèle au côté restant du bloc parallélépipédique, ce côté restant étant mis en contact avec la surface à mesurer, par laquelle est diffusée une lumière (2b), qui est convertie par le convertisseur.
